(19) Europäisches Patentamt
European Patent Office
Office européen des brevets

(11) Veröffentlichungsnummer: **0 004 020**
**B1**

(12) # EUROPÄISCHE PATENTSCHRIFT

(45) Veröffentlichungstag der Patentschrift: **15.07.81**

(51) Int. Cl.³: **C 08 L 69/00**

(21) Anmeldenummer: **79100574.7**

(22) Anmeldetag: **26.02.79**

(54) **Polycarbonat-Formmassen mit verbesserten zähelastischen Eigenschaften.**

(30) Priorität: **10.03.78 DE 2810550**

(43) Veröffentlichungstag der Anmeldung: **19.09.79 Patentblatt 79/19**

(45) Bekanntmachung des Hinweises auf die Patenterteilung: **15.07.81 Patentblatt 81/28**

(84) Benannte Vertragsstaaten: **DE FR GB IT NL**

(56) Entgegenhaltungen:
**DE-A-2 248 817**
**DE-A-2 710 729**

(73) Patentinhaber: **BAYER AG, Zentralbereich Patente, Marken und Lizenzen, D-5090 Leverkusen 1, Bayerwerk (DE)**

(72) Erfinder: **Adelmann, Siegfried, Dr., Bodelschwinghstrasse 18, D-4150 Krefeld (DE)**
Erfinder: **Margotte, Dieter, Dr., Wedelstrasse 48, D-4150 Krefeld (DE)**
Erfinder: **Nouvertné, Werner, Dr., Scheiblerstrasse 95, D-4150 Krefeld (DE)**
Erfinder: **Schreckenberg, Manfred, Dr., Doerperhofstrasse 15, D-4150 Krefeld (DE)**
Erfinder: **Kleiner, Frank, Dr., Gerstenkamp 4, D-5000 Köln 80 (DE)**

**EP 0 004 020 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG.

# Polycarbonat-Formmassen mit verbesserten zähelastischen Eigenschaften

Polycarbonate aus Diphenolen sind bekannt und haben aufgrund ihrer guten mechanischen, thermischen und elektrischen Eigenschaften Eingang in viele technische Anwendungsgebiete gefunden.

Ein gewisser Nachteil der Polycarbonate aus Diphenolen liegt in den für spezielle Anwendungen bei tiefen Temperaturen unzulänglichen zähelastischen Eigenschaften, wie beispielsweise der Kerbschlagzähigkeit und ihrem Splitterbruchverhalten. Ein weiterer Nachteil ist die gegebenenfalls nicht ausreichende Zähigkeit bei dicken Wandstärken. Der bei dünnen Wandstärken auftretende zähe Bruch geht bei dickeren Wandstärken in einen Sprödbruch über. Der Übergangsbereich wird als «kritische Dicke» (4 bis 6 mm) bezeichnet.

Es ist bekannt, die zähelastischen Eigenschaften von Polycarbonaten aus Diphenolen beispielsweise durch Zumischen von ABS-Pfropfpolymerisaten: vgl. z.B. Deutsche Auslegeschrift 1 170 141, Deutsche Offenlegungsschrift 1 900 756, zu verbessern. Nachteilig ist jedoch der Verlust der Transparenz und der Abfall einiger thermischer Eigenschaften, wie beispielsweise der Wärmeformbeständigkeit nach DIN 53 460.

Es wurde nun überraschenderweise gefunden, dass durch Zumischen von Polyäthercarbonaten und/oder Polyestercarbonaten Produkte erhalten werden, die sich durch verbesserte zähelastische Eigenschaften besonders bei tiefen Temperaturen und einer erhöhten kritischen Dicke bei Erhalt aller übrigen typischen Polycarbonat-Eigenschaften, wie Transparenz und Wärmeformbeständigkeit auszeichnen.

Die DE-OS 27 10 729 beschreibt Mischungen von aromatischen Polycarbonaten und aromatischen Polyestern, die gegen Abbau stabilisiert sind. Durch verzögerte Zugabe des Stabilisators entstehen durch partiellen Abbau als dritte Komponente Copolyester (Seite 5 der DE-OS) bzw. Polycarbonate mit aufgepfropften Polyestersequenzen (Seite 9 der DE-OS). Als Ergebnis dieser Reaktion werden Bindungen zwischen den Carboxylgruppen des ursprünglichen Polyesters und den aromatischen Kernen des Polycarbonats gebildet, während die Carboxylgruppen im ursprünglichen Polyester mit vom Diol stammenden aliphatischen oder cycloaliphatischen Gruppen verestert sind.

Die Mischungen gemäss der DE-OS dienen zur Verbesserung der Schlagfestigkeit und thermischen Beständigkeit der kristallinen Polyester, wobei der jeweilige Grad der Copolyesterbildung bzw. Propfbildung zur Erzielung von Transparenz der Gesamtmischungen beiträgt. Demgegenüber bestehen die Mischungen gemäss vorliegender Erfindung aus stabilen Komponenten.

Die einzusetzenden Polycarbonatcopolymeren mit aliphatischen Ester- und Äthersegmenten sind bei den Mischtemperaturen stabil und enthalten auch keine Arylestergruppen (Y ist in den Formeln IIa und IIb nicht Aryl). Entsprechend der unterschiedlichen Zusammensetzung ist auch das Eigenschaftsbild verschieden: Der Zusatz der Polyestercarbonate und/oder der Polyäthercarbonate verleiht den thermoplastischen Polycarbonaten eine erhöhte kritische Dicke, eine verbesserte Kerbschlagzähigkeit, sowie ein besseres Bruchverhalten, indem der Sprödbruch weitgehend vermieden ist.

Gegenstand der vorliegenden Erfindung sind somit thermoplastische Formmassen, bestehend aus

a) 90–98 Gew.-%, bevorzugt 85–95 Gew.-%, an Polycarbonaten der Formel I aus Diphenolen mit einem mittleren Gewichtsmittel-Molekulargewicht $M_w$ von 10 000 bis 20 000, bevorzugt 20 000 bis 80 000

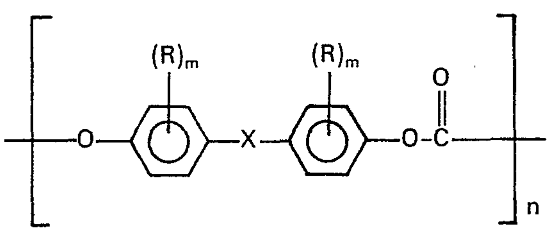

Formel (I)

und

b) 20–2 Gew.-%, bevorzugt 15–5 Gew.-%, bezogen auf die Gesamtmenge der Mischung, an Polyestercarbonaten und/oder Polyäthercarbonaten der Formeln IIa und IIb mit mittleren Gewichtsmittel-Molekulargewichten von $M_w$ = 50 000 bis 300 000, bevorzugt 70 000 bis 150 000, die 50–70 Gew.-% an Polyesterweichsegmenten B bzw. Polyätherweichsegmenten C mit mittleren Zahlenmittel-Molekulargewichten $M_n$ von 10 000 bis 20 000, bevorzugt 12 000 bis 18 000, enthalten.

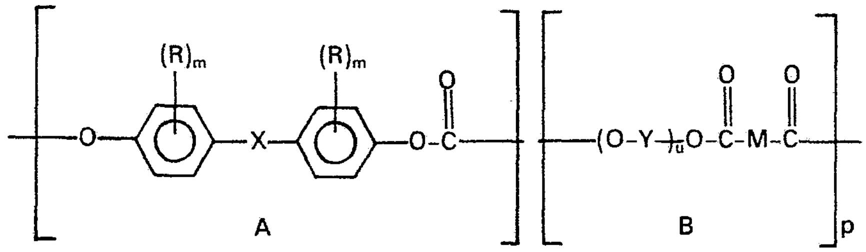

Formel IIa
Polyestercarbonat

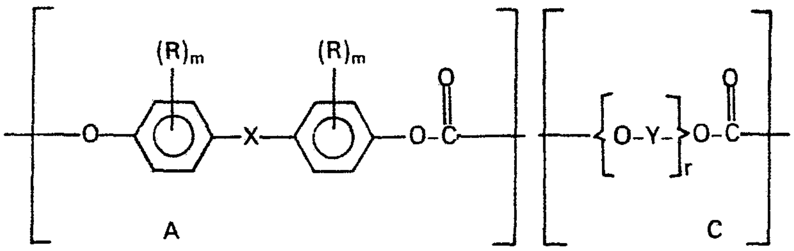

Formel IIb
Polyäthercarbonat

In den Formeln I, IIa und IIb bedeuten
R = Wasserstoff, Chlor, Brom, gesättigte Alkylsubstituenten mit 1 bis 3 C-Atomen,
m = 0, 1, 2
X = eine Bindung, $C_1$–$C_8$-Alkylen, $C_2$–$C_8$-Alkyliden, $C_5$–$C_{15}$-Cycloalkylen, $C_5$–$C_{15}$-Cycloalkyliden, $SO_2$, SO, O, CO oder

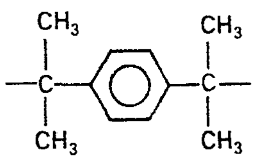

n = 20–40
u = 1–50
p = 50–170
r = 65–450
Y = ein $C_2$–$C_{15}$ lineares oder verzweigtes Alkylen,
M = eine Bindung, $C_1$–$C_{15}$-Alkylen, $C_5$–$C_{12}$-Cycloalkylen, $C_6$–$C_{15}$-Arylen oder Heteroarylen.

Als Arylen-Reste M kommen vorzugsweise Phenylen-Reste, als Heteroarylen-Reste kommen vorzugsweise 5- oder 6gliedrige Heterocyclen in Betracht.

Die zur Herstellung der erfindungsgemäss verwendbaren Polycarbonate der Formel I geeigneten Diphenolen sind z.B.:
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-äther
Bis-(hydroxyphenyl)-sulfoxide
Bis-(hydroxyphenyl)-sulfone
α,α′-Bis-(hydroxyphenyl)-diisopropylbenzole,
sowie deren kernalkylierte und kernhalogenierte Verbindungen.

Diese und weitere geeignete Diphenole sind z.B. in den US-Patentschriften 3 028 365, 2 999 835, 3 148 172, 3 271 368, 2 991 273, 3 271 367, 3 280 078, 3 014 891 und 2 999 846, in den Deutschen Offenlegungsschriften 1 570 703, 2 063 050, 2 063 052, 2 211 956, 2 211 957, der Französischen Patentschrift 1 561 518 und in der Monographie «H. Schnell, Chemistry and Physics of Polycarbonates, Interscience Publishers, New York, 1964» beschrieben.

Bevorzugte Diphenole sind z.B.:
2,2-Bis-(4-hydroxyphenyl)-propan
2,2-Bis-(3,5-dimethyl-4-hydroxyphenyl)-propan
2,2-Bis-(3,5-dichlor-4-hydroxyphenyl)-propan
2,2-Bis-(3,5-dibrom-4-hydroxyphenyl)-propan
1,1-Bis-(4-hydroxyphenyl)-cyclohexan
1,1-Bis-(4-hydroxyphenyl)-propan
1,1-Bis-(4-hydroxyphenyl)-butan

Die Polycarbonate können darüber hinaus durch den Einbau geringer Mengen, vorzugsweise von Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxylgruppen verzweigt sein.

Polycarbonate dieser Art sind z.B. in den Deutschen Offenlegungsschriften 1 570 533, 1 595 762, 2 116 974, 2 113 347, 2 500 092 der Britischen Patentschrift 1 079 821 und der US-Patentschrift 3 544 514 beschrieben.

Die Herstellung der Polycarbonate kann im wesentlichen nach zwei bekannten Verfahren (vgl. H. Schnell, Chemistry and Physics of Polycarbonates, Polymer Rev., Vol. IX, Seite 27 ff., Interscience Publishers) erfolgen:

1. Herstellung der Polycarbonate in heterogener Phase (Phasengrenzflächenverfahren) durch Umsetzung einer wässrigen Natrium-Bisphenolat-Lösung in Anwesenheit von Methylenchlorid mit Phosgen.

2. Herstellung der Polycarbonate in homogener Phase (Pyridinverfahren) durch Umsetzung der aromatischen Dihydroxyverbindung in Pyridin gelöst mit Phosgen in Anwesenheit von Methylenchlorid.

Zur Herstellung der erfindungsgemäss verwendbaren Polyestercarbonate der Formel IIa sind Polyester geeignet, die durch Umsetzung von mehrwertigen, vorzugsweise zweiwertigen

und gegebenenfalls zusätzlich dreiwertigen, Alkoholen mit mehrwertigen, vorzugsweise zweiwertigen Carbonsäuren nach bekannten Verfahren erhalten werden (s. z.B. Houben-Weyl, Band 8, S. 516 ff, Georg Thieme Verlag Stuttgart, 1952) und Molekulargewichte $M_n$ (Zahlenmittel) bis ca. 20000 besitzen, vorzugsweise von 12000 bis 18000.

Geeignete Alkohole sind z.B. niedermolekulare aliphatische Diole mit 2–15 C-Atomen, besonders lineare oder verzweigte aliphatische Diole mit 2–10 C-Atomen, wie beispielsweise Äthylenglykol, Propylenglykol-(1,2) und -(1,3), Butylenglykol-(1,4) und -(2,3), Hexandiol-(1,6), Octandiol-(1,8), Neopentylglykol, Decandiol-1,10, ferner Poly(alkylenoxid)-α,ω-diole wie Diäthylenglykol, Triäthylenglykol, Polyäthylenglykol, Poly(tetramethylenoxid)-α,ω-diole, statistische oder Block-Copolymere von Äthylen- und 1,2-Propylenoxid, auch Polyformale (z.B. aus Hexandiol-1,6 und Formaldehyd). Als Dicarbonsäuren sind aliphatische, cycloaliphatische und aromatische Dicarbonsäure geeignet, z.B. Oxalsäure, Malonsäure, Adipinsäure, Korksäure, Azelainsäure, Sebacinsäure, Decandicarbonsäure, Terephthalsäure, Isophthalsäure und Gemische dieser Säuren. Vorzugsweise sind aliphatische Dicarbonsäuren mit 2 bis 12 C-Atomen geeignet.

Statt der freien Carbonsäuren können auch die Carbonsäureanhydride oder entsprechende Carbonsäureester von niedrigen Alkoholen oder deren Gemische zur Herstellung der Polyester verwendet werden.

Zur Herstellung der erfindungsgemäss verwendbaren Polyäthercarbonate der Formel IIb sind als Polyäther Polyalkylenoxiddiole mit Molekulargewichten $M_n$ (Zahlenmittel) bis 20000, vorzugsweise von 12000 bis 18000, geeignet, die nach bekannten Verfahren (s. z.B. Winnacker-Küchler, Bd. 4, 71, Carl Hanser Verlag, München 1972) hergestellt werden, z.B. Polytetrahydrofurandiole, Polyäthylenoxidglykole.

Die Polyestercarbonate bzw. Polyäthercarbonate der allgemeinen Formeln IIa bzw. IIb werden ebenfalls im wesentlichen nach zwei bekannten Verfahren hergestellt.

Die Herstellung in heterogener Phase nach dem Phasengrenzflächenverfahren ist z.B. von S.H. Merrill, J. Polymer Sci., 55, 343 (1961), die Herstellung in homogener Phase nach dem Pyridinverfahren z.B. von K.P. Perry, W.J. Jackson, Jr. und J.R. Caldwell, Ind. Eng. Chem. Prod. Res. Develop., 2, 246 (1963) beschrieben.

Die Aufarbeitung erfolgt nach den für Polycarbonat bekannten Methoden, z.B. Ausdampfung des Lösungsmittels in Ausdampfextrudern.

Die erfindungsgemässen Formmassen aus Polycarbonaten und Polyestercarbonaten und/oder Polyäthercarbonaten werden in herkömmlichen Mischaggregaten, wie Knetern und Schneckenextrudern oder durch Mischen der Lösungen beider Komponenten und anschliessender Isolierung über einen Ausdampfextruder hergestellt.

Die Mischungen aus Polycarbonaten und Polyestercarbonaten und/oder Polyäthercarbonaten können als Folien und Formkörper überall dort eingesetzt werden, wo einerseits hohe Kerbschlagzähigkeiten bei tiefen Temperaturen, hohe Zähigkeiten bei grösseren Wandstärken sowie Transparenz gefordert werden.

Die folgenden Beispiele sollen den Erfindungsgegenstand näher erläutern. Die angegebenen relativen Lösungsviskositäten werden in Methylenchlorid bei 25°C und einer Konzentration von 5 g/l gemessen.

Die Eigenschaften der Formmassen aus Beispiel 1 sowie der Formmassen aus den Beispielen 5–12 sind in der Tabelle I zusammengefasst.

Beispiel 1 (Polycarbonat)

Ca. 454 Teile 4,4′-Dihydroxydiphenyl-2,2-propan und 9,5 Teile p-tert.-Butylphenol werden in 1,5 l Wasser suspendiert. In einem 3-Halskolben, ausgestattet mit Rührer und Gaseinleitungsrohr, wird der Sauerstoff aus der Reaktionsmischung entfernt, indem unter Rühren 15 min. lang Stickstoff durch die Reaktionsmischung geleitet wird. Dann werden 355 Teile 45%iger Natronlauge und 1000 Teile Methylenchlorid zugegeben. Die Mischung wird auf 25°C abgekühlt. Unter Aufrechterhaltung dieser Temperatur durch Kühlen werden 237 Teile Phosgen während einer Zeitdauer von 120 min. zugegeben.

Eine zusätzliche Menge von 75 Teilen einer 45%igen Natronlauge wird nach 15–30 min. zugegeben bzw., nachdem die Phosgenaufnahme begonnen hat. Zu der entstandenen Lösung werden 1,6 Teile Triäthylamin zugegeben und die Mischung weitere 15 min. gerührt. Eine hochviskose Lösung wird erhalten, deren Viskosität durch Zugabe von Methylenchlorid reguliert wird. Die wässrige Phase wird abgetrennt. Die organische Phase wird mit Wasser salz- und alkalifrei gewaschen. Das Polycarbonat hat eine relative Viskosität von 1,29, gemessen in einer 0,5%igen Lösung von Methylenchlorid bei 20°C. Das entspricht ungefähr einem Molekulargewicht von 32000. Das so gewonnene Polycarbonat wird extrudiert und granuliert.

Beispiel 2 (Polyestercarbonat)

5 kg (0,38 Mol) eines Butandiol-Adipinsäure-Polyesters mit Hydroxylendgruppen und dem Molekulargewicht 13000 werden in 30 l Methylenchlorid gelöst. In diese Lösung tropfen bei 18°C innerhalb einer halben Stunde 320 ml (4,7 Mol) Phosgen in 5 l Methylenchlorid gelöst. Die Lösung wird 40 min. gerührt und anschliessend mit einer wässrigen Bisphenolat-Lösung, bestehend aus 5 kg (22 Mol) Bisphenol A und 29,5 kg (48 Mol) 6,5%iger Natronlauge, versetzt.

Es werden 80 l Methylenchlorid und 33 g (0,2 Mol) p-t-Butylphenol als Kettenabbrecher zugefügt. In die Reaktionsmischung werden 400 g (4 Mol) Phosgen innerhalb einer Stunde bei einem pH-Wert von 13 bei 20°C eingeleitet. Zur Aufrechterhaltung des pH-Wertes benötigt man zusätzlich 53,6 kg (87 Mol) 6,5%ige Natronlauge. Nach der Phosgeneinleitung werden als Kondensationskatalysator 500 ml 4%ige Triäthylaminlösung zugefügt und 1 Stunde zur Nachkondensation gerührt. Die Aufarbeitung des Polyestercarbonats erfolgt durch Abdampfen des Lösungsmittels. Man erhält ein Polyestercarbonat mit der rel. Viskosität 1,998.

Beispiel 3a (Polyestercarbonat)
Nach dem in Beispiel 2 beschriebenen Verfahren wird ein Polyester aus 10,5 kg (1,27 Mol) eines Hexandiol-Sebacinsäure-Polyesters und dem Molekulargewicht 18000 und 4,5 kg (19,7 Mol) Bisphenol A mit Phosgen ohne Kettenabbrecher zu einem Polyestercarbonat mit einer rel. Lösungsviskosität von 2,305 umgesetzt.

Beispiel 3b (Polyestercarbonat)
Nach dem in Beispiel 2 beschriebenen Verfahren wird ein Polyester aus 10,5 kg (0,58 Mol) eines Hexandiol-(1,6)-Adipinsäure-Polyesters mit dem Molekulargewicht 14000 und 4,04 kg (17,7 Mol) Bisphenol A mit Phosgen zu einem Polyestercarbonat mit einer rel. Lösungsviskosität von 2,16 umgesetzt.

Beispiel 3c (Polyestercarbonat)
Nach dem in der DE-OS 22 11 957 beschriebenen Verfahren werden ein Polyester aus 7,5 kg (0,75 Mol) Octandiol-(1,8)-, Propylenglykol-(1,3) (1:1)-Korksäure-Polyester mit dem Molekulargewicht 10000 und 6,87 kg (24,2 Mol) Tetramethylbisphenol A mit Phosgen zu einem Polyestercarbonat mit einer rel. Lösungsviskosität von 1,75 umgesetzt.

Beispiel 3d (Polyestercarbonat)
Nach dem in Beispiel 2 beschriebenen Verfahren wird ein Polyester aus 7,5 kg (0,75 Mol) Äthylenglykol-Butandiol-(1,4)-Adipinsäure-Polyester mit dem Molekulargewicht 10000 und 6,1 kg (26,6 Mol) Bisphenol A und 0,7 kg (1,9 Mol) Tetrachlorbisphenol A mit Phosgen zu einem Polyestercarbonat mit einer rel. Lösungsviskosität von 1,85 umgesetzt.

Beispiel 3e (Polyestercarbonat)
Nach dem in Beispiel 2 beschriebenen Verfahren wird ein Polyester aus 9,0 kg (0,56 Mol) Hexandiol-(1,6)-Butandiol-(1,4) (75:25)-Sebacinsäure mit dem Molekulargewicht 16000 und 4,6 kg (20,1 Mol) Bisphenol A und 0,9 kg (1,58 Mol) Tetrabrombisphenol A mit Phosgen zu einem Polyestercarbonat mit einer rel. Lösungsviskosität von 2,02 umgesetzt.

Beispiel 4a (Polyäthercarbonat)
Nach dem in Beispiel 2 beschriebenen Verfahren werden 5,25 kg (0,33 Mol) eines Polyäthylenoxidglykols mit dem Molekulargewicht 16000 und 4,5 kg (19,7 Mol) Bisphenol A mit Phosgen zu einem Polyäthercarbonat mit einer rel. Lösungsviskosität von 1,89 umgesetzt.

Beispiel 4b (Polyäthercarbonat)
Nach dem in Beispiel 2 beschriebenen Verfahren werden 9,0 kg (0,90 Mol) eines Polyäthylenoxidglykols mit dem Molekulargewicht 10000 mit 5,4 kg (23,6 Mol) Bisphenol A mit Phosgen zu einem Polyäthercarbonat mit einer rel. Lösungsviskosität von 1,93 umgesetzt.

Beispiel 4c (Polyäthercarbonat)
Nach dem in Beispiel 2 beschriebenen Verfahren werden 7,5 kg (0,47 Mol) eines Poly-(1,2-propylenoxid)-glykols mit einem Molekulargewicht 16000 und 6,7 kg (29,5 Mol) Bisphenol A mit Phosgen zu einem Polyäthercarbonat mit einer rel. Lösungsviskosität von 1,84 umgesetzt.

Beispiel 4d (Polyäthercarbonat)
Nach dem in Beispiel 2 beschriebenen Verfahren werden 9,0 kg (0,6 Mol) eines Poly-(1,2-butylenoxid)-glykols mit dem Molekulargewicht 15000 und 5,5 kg (19,4 Mol) Bisphenol A mit Phosgen zu einem Polyäthercarbonat mit einer rel. Lösungsviskosität von 1,78 umgesetzt.

Beispiel 4e (Polyätherestercarbonat)
Nach dem in Beispiel 2 beschriebenen Verfahren werden 10,5 kg (1,05 Mol) eines Polyätheresters aus 96,46 Gew.-% Polybutandiol ($M_n$ 2000) und 4,69 Gew.-% Adipinsäure mit dem Molekulargewicht 10000 und 4,0 kg (17,5 Mol) Bisphenol A mit Phosgen zu einem Polyätherestercarbonat mit einer rel. Lösungsviskosität von 2,43 umgesetzt.

Beispiel 5
85 Gew.-Teile des Polycarbonats aus Beispiel 1 werden mit 15 Gew.-Teilen des Polyestercarbonats aus Beispiel 2 als Methylenchloridlösung gemischt und über einen Ausdampfextruder bei 320 °C und 13.33 Pa (0,1 Torr) extrudiert. Die rel. Lösungsviskosität beträgt 1,322.

Beispiel 6
95 Gew.-Teile Polycarbonat aus Beispiel 1 und 5 Gew.-Teile Polyestercarbonat aus Beispiel 2 werden als Granulat gemischt und über eine Doppelwellenschnecke bei 320 °C extrudiert. Die rel. Lösungsviskosität beträgt 1,297.

Beispiel 7
90 Gew.-Teile Polycarbonat aus Beispiel 1 und 10 Gew.-Teile Polyestercarbonat aus Beispiel 3a werden als Granulat gemischt und über eine Doppelwellenschnecke bei 320 °C extrudiert. Die rel. Lösungsviskosität beträgt 1,333.

Beispiel 8
92 Gew.-Teile Polycarbonat aus Beispiel 1 und 8 Gew.-Teile Polyäthercarbonat aus Beispiel 4a werden als Methylenchloridlösungen gemischt und über einen Ausdampfextruder bei 320 °C und 13.33 Pa (0,1 Torr) extrudiert. Die rel. Lösungsviskosität beträgt 1,298.

Beispiel 9
96 Gew.-Teile eines Polycarbonats aus Beispiel 1 und 4 Gew.-Teile Polyestercarbonat aus Beispiel 3c werden als Granulat gemischt und über eine

Doppelwellenschnecke bei 320 °C extrudiert. Die rel. Lösungsviskosität beträgt 1,31.

Beispiel 10
88 Gew.-Teile eines Polycarbonats aus Beispiel 1 werden mit 12 Gew.-Teilen eines Polyestercarbonats aus Beispiel 3d als Granulat gemischt und über eine Doppelwellenschnecke bei 320° C extrudiert. Die rel. Lösungsviskosität beträgt 1,33.

Beispiel 11
90 Gew.-Teile eines Polycarbonats aus Beispiel 1 und 10 Gew.-Teile eines Polyätherestercarbonats aus Beispiel 4e werden als Granulat gemischt und über eine Doppelwellenschnecke bei 320 °C extrudiert. Die rel. Lösungsviskosität beträgt 1,35.

Beispiel 12
85 Gew.-Teile eines Polycarbonats aus Beispiel 1 und 15 Gew.-Teile eines Polyäthercarbonats aus Beispiel 4c werden als Methylenchloridlösungen gemischt und über einen Ausdampfextruder bei 320 °C und 0,1 Torr extrudiert. Die rel. Lösungsviskosität beträgt 1,31.

Tabelle I

| | Polyestercarbonat- bzw. Polyäthercarbonat-Gehalt der Mischung | Molgewicht des Weichsegments $M_n$ | Kerbschlagzähigk.*) Raumtemp. | -20 | kJ/m² -40 °C | Vicat B**) °C | krit. Dicke ***) mm |
|---|---|---|---|---|---|---|---|
| Beispiel 1 (Vergleich) | – | – | 35 | 22 | 10 | 150 | 5,7–6 |
| Beispiel 5 | 15 | 13 000 | 40 | 39 | 20 | 145 | >9 |
| Beispiel 6 | 5 | 13 000 | 44 | 30 | 15 | 148 | 7,1–7,4 |
| Beispiel 7 | 10 | 18 000 | 42 | 35 | 18 | 146 | >9 |
| Beispiel 8 | 8 | 16 000 | 41 | 35 | 20 | 147 | >9 |
| Beispiel 9 | 4 | 10 000 | 46 | 34 | 16 | 148 | 7,4–7,7 |
| Beispiel 10 | 12 | 10 000 | 42 | 38 | 19 | 145 | >9 |
| Beispiel 11 | 10 | 10 000 | 43 | 36 | 18 | 146 | 7,4–7,7 |
| Beispiel 12 | 15 | 16 000 | 40 | 32 | 20 | 145 | >9 |

*) DIN 53 453
**) DIN 53 460
***) Izod ASTM-0256

**Patentansprüche**

1. Thermoplastische Formmassen, bestehend aus

a) 80–98 Gew.-%, bevorzugt 85–95 Gew.-% Polycarbonaten der Formel I aus Diphenolen mit mittleren Gewichtsmittelmolekulargewichten $M_w$ von 10 000 bis 200 000, bevorzugt 20 000 bis 80 000

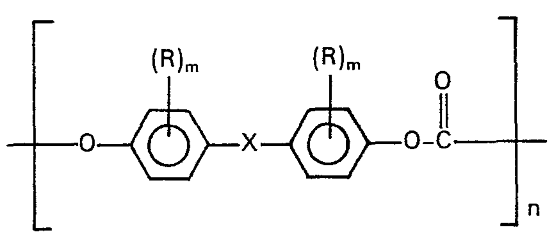

Formel (I)

und
b) 20–2 Gew.-%, bevorzugt 15–5 Gew.-%, bezogen auf die Gesamtmenge der Mischung, an Polyester- und/oder Polyäther-carbonaten der Formeln IIa und IIb mit mittleren Gewichtsmittelmolekulargewichten von $M_w$ = 50 000 bis 300 000, bevorzugt 70 000 bis 150 000, die 50–70 Gew.-% an Polyesterweichsegmenten B bzw. Polyätherweichsegmenten C mit mittleren Zahlenmittelmolekulargewichten von $M_n$ = 10 000 bis 20 000, bevorzugt 12 000 bis 18 000, enthalten,

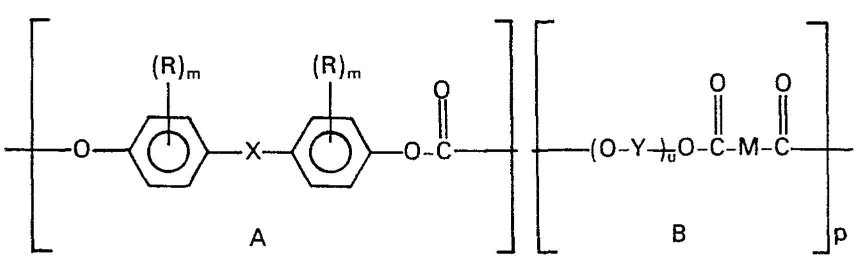

Formel IIa
Polyestercarbonat

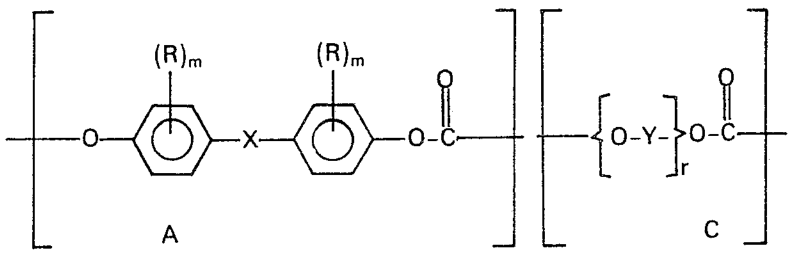

Formel IIb
Polyäthercarbonat

wobei in den Formeln I, IIa und IIb
R = Wasserstoff, Chlor, Brom, gesättigte Alkylsubstituenten mit 1-3 C-Atomen
m = 0, 1, 2
X = eine Bindung, $C_1$-$C_8$-Alkylen, $C_2$-$C_8$-Alkyliden, $C_5$-$C_{15}$-Cycloalkylen, $C_5$-$C_{15}$-Cycloalkyliden, $SO_2$, SO, O, CO oder

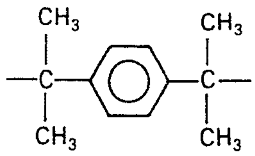

n = 20-400
u = 1-50
p = 50-170
r = 65-450
Y = ein lineares oder verzweigtes $C_2$-$C_{15}$-Alkylen,
M = eine Bindung, $C_1$-$C_{15}$-Alkylen, $C_5$-$C_{12}$-Cycloalkylen, $C_6$-$C_{15}$-Arylen oder Heteroarylen bedeuten.

2. Thermoplastische Formmassen gemäss Anspruch 1, dadurch gekennzeichnet, dass als Polyesterweichsegmente der Polyestercarbonate solche auf Basis aliphatischer Diole mit 2 bis 10 C-Atomen und aliphatischer Dicarbonsäure mit 2 bis 12 C-Atomen verwendet werden.

3. Thermoplastische Formmassen gemäss Anspruch 1, dadurch gekennzeichnet, dass als Polyätherweichsegmente der Polyäthercarbonate solche auf Basis von Polyalkylenoxiddiolen verwendet werden.

**Claims**

1. Thermoplastic moulding compositions comprising
a) 80-98% by weight, preferably 85-95% by weight of polycarbonates of the formula I obtained from diphenols with mean weight-average molecular weights $M_w$ of 10,000 to 200,000, preferably 20,000 to 80,000

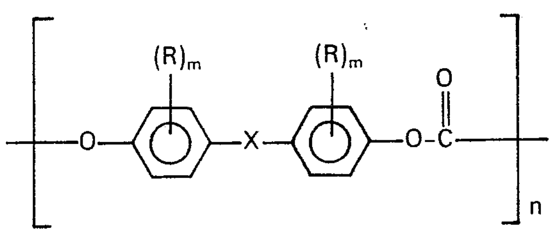

Formel (I)

and
b) 20 to 2% by weight, preferably 15-5% by weight, relative to the total weight of the mixture, of polyester-carbonates and/or polyether-carbonates of the formulae IIa and IIb with mean weight-average molecular weights $M_w$ of 50,000 to 300,000, preferably 70,000 to 150,000, which contain 50-70% by weight of soft polyester segments B or soft polyether segments C with mean number-average molecular weights $M_n$ of 10,000 to 20,000, preferably 12,000 to 18,000,

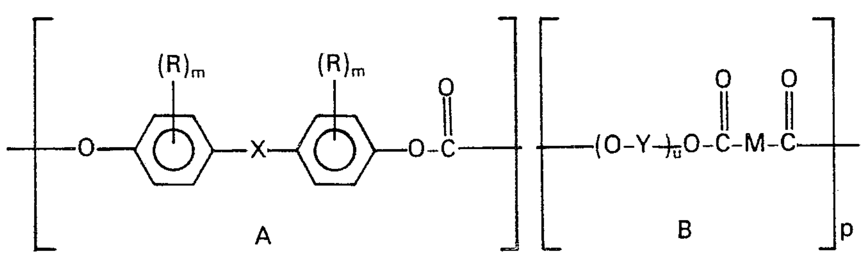

Formel IIa
Polyestercarbonat

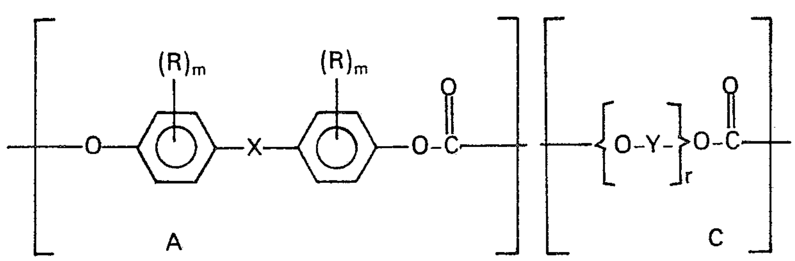

Formel IIb
Polyäthercarbonat

in which, in the formulae I, IIa and IIb
R = hydrogen, chlorine, bromine, saturated alkyl substituents with 1 to 3 carbon atoms,
m = 0, 1, 2
X = a bond, $C_1$-$C_8$ alkylene,
$C_2$-$C_8$ alkylidene, $C_5$-$C_{15}$ cycloalkylene, $C_5$-$C_{15}$ cycloalkylidene, $SO_2$, SO, O, CO or

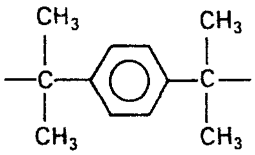

n = 20-400,
u = 1-50,
p = 50-170,
r = 65-450
Y = a linear or branched $C_2$-$C_{15}$ alkylene,
M = a bond, $C_1$-$C_{15}$ alkylene, $C_5$-$C_{12}$ cycloalkylene, $C_6$-$C_{15}$ arylene or hetero-arylene.

2. Thermoplastic moulding compositions according to Claim 1, characterised in that the soft polyester segments of the polyester-carbonates are those based on aliphatic diols with 2 to 10 carbon atoms and aliphatic dicarboxylic acid with 2 to 12 carbon atoms.

3. Thermoplastic moulding compositions according to claim 1, characterised in that the soft polyether segments of the polyether-carbonates are those based on polyalkylene oxide diols.

**Revendications**

1. Des matières à mouler thermoplastiques composées de:
a) 80 à 98% en poids, de préférence 85 à 95% en poids, de polycarbonates de formule I dérivés de diphénols ayant des moyennes en poids $M_p$ du poids moléculaire de 10 000 à 200 000, de préférence de 20 000 à 80 000

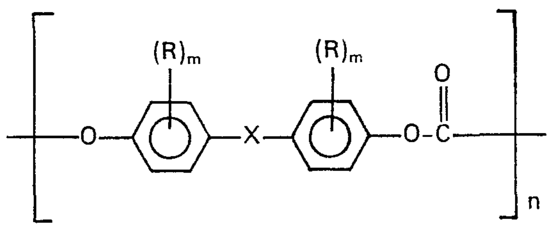
Formel (I)

et
b) 20 à 2% en poids, de préférence 15 à 5% en poids, par rapport à la quantité totale de mélange, de polyester- et/ou polyéther-carbonates de formules IIa et IIb avec des moyennes en poids $M_p$ du poids moléculaire de 50 000 à 300 000, de préférence de 70 000 à 150 000, qui contiennent 50 à 70% en poids de segments polyester mous B ou de segments polyéther mous C avec des moyennes en nombre $M_n$ du poids moléculaire de 10 000 à 20 000, de préférence de 12 000 à 18 000

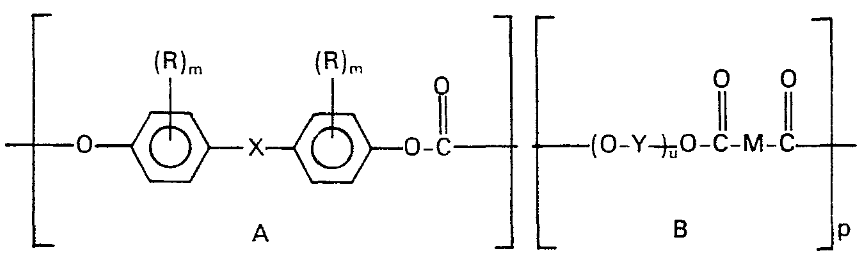
Formel IIa
Polyestercarbonat

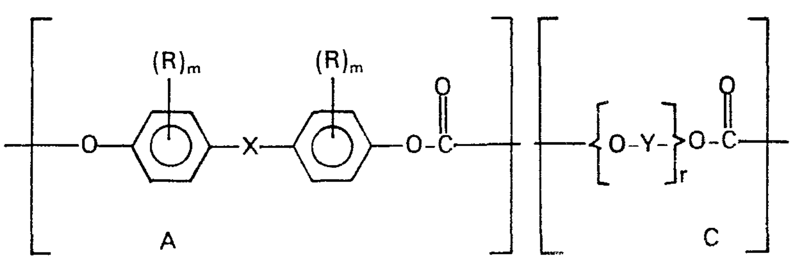
Formel IIb
Polyäthercarbonat

formules I, IIa et IIb dans lesquelles:
R = hydrogène, chlore, brome, substituants alkyle saturés ayant 1 à 3 atomes de carbone
m = 0, 1, 2

X = une liaison, un groupe alkylène en $C_1$ à $C_8$, un groupe alkylidène en $C_2$ à $C_8$, un groupe cycloalkylène en $C_5$ à $C_{15}$, un groupe cycloalkylidène en $C_5$ à $C_{15}$, $SO_2$, SO, O, CO ou un groupe

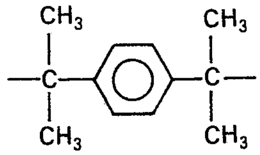

n = 20-400
u = 1-50
p = 50-170
r = 65-450
Y = un groupe alkylène linéaire ou ramifié en $C_2$ à $C_{15}$
M = une liaison, un groupe alkylène en $C_1$ à $C_{15}$, un groupe cycloalkylène en $C_5$ à $C_{12}$, un groupe arylène en $C_6$ à $C_{15}$ ou un groupe hétéro-arylène.

2. Matières thermoplastiques à mouler suivant la revendication 1, caractérisées en ce que les segments polyester mous des polyester-carbonates utilisés sont des segments à base de diols aliphatiques ayant 2 à 10 atomes de carbone et d'un acide dicarboxylique aliphatique ayant 2 à 12 atomes de carbone.

3. Matières thermoplastiques à mouler suivant la revendication 1, caractérisées en ce que les segments polyéther mous des polyéther-carbonates utilisés sont des segments à base de diols d'oxydes polyalkyléniques.